**Europäisches Patentamt**

**European Patent Office**

**Office européen des brevets**

(19)

(11) Publication number : **0 335 952 B1**

# EUROPEAN PATENT SPECIFICATION

(12)

(45) Date of publication of patent specification :
**22.07.92 Bulletin 92/30**

(51) Int. Cl.⁵ : **B60R 19/20**

(21) Application number : **88909390.2**

(22) Date of filing : **15.10.88**

(86) International application number :
**PCT/KR88/00021**

(87) International publication number :
**WO 89/03328 20.04.89 Gazette 89/09**

(54) **SHOCK ABSORBER FOR A CAR.**

(30) Priority : **15.10.87 KR 1987175 U**

(43) Date of publication of application :
**11.10.89 Bulletin 89/41**

(45) Publication of the grant of the patent :
**22.07.92 Bulletin 92/30**

(84) Designated Contracting States :
**DE FR GB IT**

(56) References cited :
**DE-A- 2 020 360**
**DE-A- 2 135 474**
**DE-A- 3 032 444**
**DE-B- 2 316 503**
**DE-B- 2 320 262**
**FR-A- 774 896**
**US-A- 3 708 194**
**US-A- 3 764 174**

(73) Proprietor : **LEE, Sang Man**
**3009 Trudilane**
**Burbank, CA 91504 (US)**
Proprietor : **PARK, Heung Jong**
**410-4, Beon 1-dong**
**Dobong-ku, Seoul 132-061 (KR)**

(72) Inventor : **PARK, Heung, Jong**
**410-4, Beon 1-dong**
**Dobong-ku Seoul 132-061 (KR)**

(74) Representative : **Beresford, Keith Denis Lewis
et al
BERESFORD & Co. 2-5 Warwick Court High
Holborn
London WC1R 5DJ (GB)**

Jouve, 18, rue Saint-Denis, 75001 PARIS

# Description

## TECHNICAL FIELD

The present invention relates to a shock absorber system for a car, more specifically relates to a shock absorber for a car which the external covering portions that may be contacted from outside such as a roof, the doors and the side panels of front and rear parts as well as the front and rear bumpers of a car are structured with the air sheets filled with compressed air or helium gas, so that a shock inflicted from outside at the time of a collision or an overturn of a car can remarkably be absorbed and relieved.

## BACKGROUND ART

Generally in usual car, as is well known, the front and rear bumpers using relief effect of spring or oil pressure are mounted at each of front and rear of a car for absorbing or relieving a shock at the time of collision of a car. However, the bumpers which have a structure as well known have effect at the time of a slight collision, but it was considerably insufficient for protecting the occupants or a car body as for the relief or absorption effect against shock of bumper itself in case of a collision during high speed driving with a car. Further, in case that a car is collided from a side or fallen down and overturned, since a separate apparatus for relieving or absorbing the shock in accordance with such case is not provided not only the body of a car is easily damaged, but also the occupants get hurt due to its shock otherwise become to lose a human life in case of excessively bad.

DE-A- 3 032 444 shows a shock absorber system for a car whereby external covering portions such as the front bumper and side panels are structured with elements filled with compressed gas.

DE-B- 2 320 262 shows a shock absorber system for a car whereby the front and rear bumpers are structured with elements filled with compressed gas and are connected each other by a tube.

## SUMMARY OF THE INVENTION

Therefore, a primary object of the present invention is to provide a shock absorber for a car which a safety of the occupants is secured as far as possible by allowing a shock inflicted with a car to be relieved by absorbing it even in case of overturn due to the collision from a side and a fall as well as a front collision.

Another object of the present invention is to provide a shock absorber for a car which a shock becoming to receive in time that a car collides is allowed to absorb in a step manner by constructing the front and rear bumpers with three stage structure for the low, medium and high pressure shock absorption, so that the shock absorption effect is remarkably enhanced.

A further object of the present invention is to provide a shock absorber for a car which the gas circulation tubes are interconnected among the front and rear bumpers and the right and left side in case that a car is collided from the front or rear and from the right or left, thereby a puncture caused by an instantaneous shock is prevented and also the shock absorbing effect due to the dispersion of the gas is enhanced further.

The present invention also aims that a helium gas which is light in specific gravity and has no anxiety of explosion in time of collision is filled into an air sheet formed with tube like shape instead of an air so that, in case that a material of the air sheet is applied with a metal plate having high strength, the matter of weight accompanying with this application can be solved.

The present invention also intends to provide a shock absorber for a car which almost whole part of the external covering portion of a car is structured with the air sheets and thereby a buoyancy thereof is made to raise so that, in case that a car is fallen into a water, the drowning of the occupants is allowed to be able to avoid.

The present invention aims also to provide a shock absorber for a car which a mechanical noise or the like of an engine is absorbed by the gas filled into the air sheets so that the noise preventing effect is obtained additionally.

In order to attain the above objects, the present invention is comprised of front and rear bumpers which are made of some bumper members for the low, medium and high pressure shock absorption filled with an air or gas of predetermined pressure into the interior thereof with the different thicknesses and gas capacity, air sheets for the side panels at front and rear which a gas of predetermined pressure is filled into the interior thereof by being formed with an identical shape to the side panels at front and rear of existing car, air sheets for doors which a gas of predetermined pressure is filled into the interior thereof with an identical shape to the external cover portion of the doors, an air sheet for roof which a gas of predetermined pressure is filled into the interior thereof with an identical shape to the roof, the longitudinal gas circulation tubes which are arranged longitudinally within the body of a car so that a front bumper member for the medium and high pressure shock absorption and a rear bumper member for the medium and high pressure shock absorption are interconnected so as to be communicated with a gas of interior, lateral gas circulation tubes which are arranged laterally within the body of a car as to cross each other with said longitudinal gas circulation tubes so that the air sheets for side panels of right and left at front part are interconnected, and a gas circulation control means which is arranged at a crossing point of said longitudinal gas circulation tubes and said lateral gas circulation tubes so that the circulation of gas is controlled.

## BRIEF DESCRIPTION OF THE DRAWINGS

FIG. 1 is a top plan view of a car showing an embodiment of the present invention.

FIG. 2 is a side view of a car showing an embodiment of the invention.

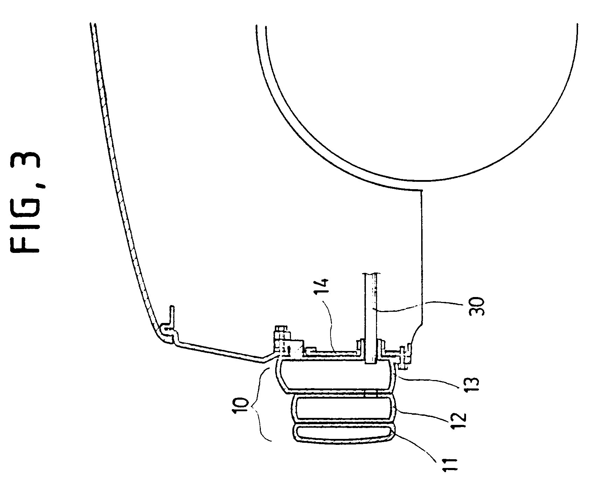

FIG. 3 is an enlarged sectional view taken along the lines III-III of FIG. 1.

FIG. 4 is an enlarged sectional view taken along the lines IV-IV of FIG. 2.

FIG. 5 is an enlarged sectional view taken along the lines V-V of FIG. 2.

## DETAILED DESCRIPTION OF THE INVENTION

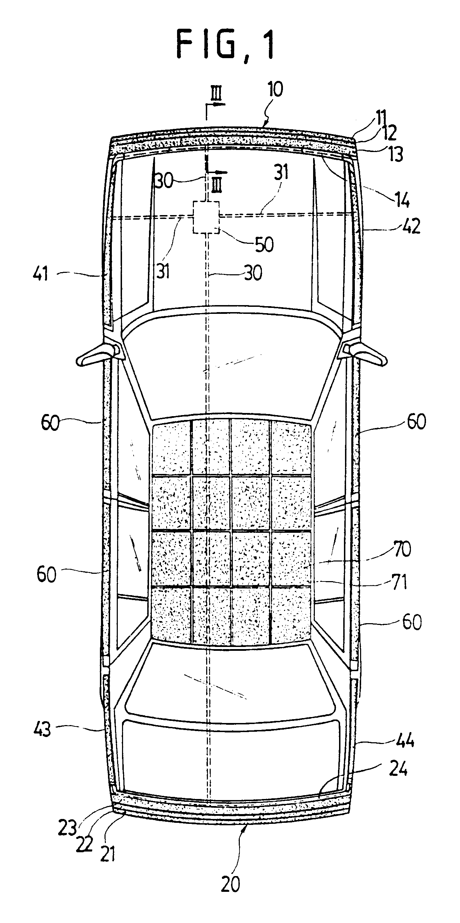

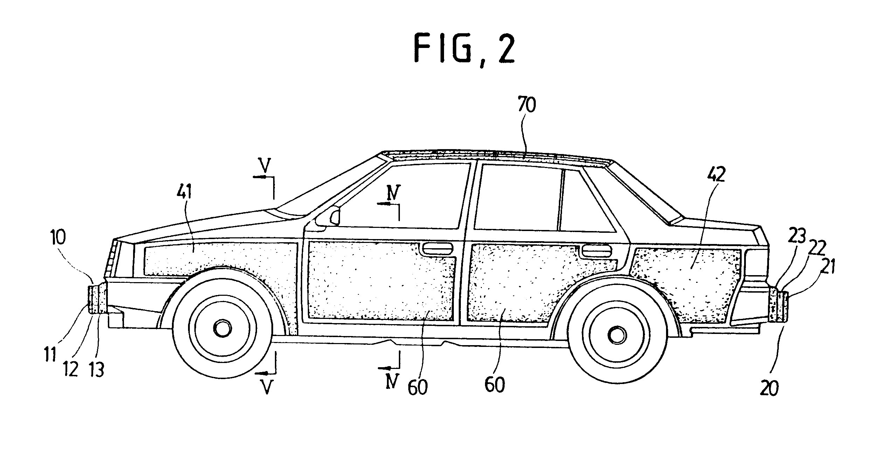

Hereafter, the shock absorber for a car of the present invention will be described in detail with reference to the accompanying drawings. FIG. 1 and FIG. 2 show an embodiment of the present invention, in which a front bumper 10 is mounted at a front part of a car in a condition being supported with a front bumper supporting plate 14 which is constructed with the bumper members 11, 12 and 13 for the low, medium and high pressure shock absorption being filled with a gas of predetermined pressure into the interior thereof with the different thicknesses and the gas capacity respectively, and similarly a rear bumper 20 which is constructed with the bumper members 21, 22 and 23 for the low, medium and high pressure shock absorption in turn from outside is mounted also at a rear part of the body of a car in a condition being supported with a rear bumper supporting plate 24. The bumper members 11, 21 for low pressure shock absorption of foresaid front and rear bumpers 10, 20 are made to absorb a relatively light shock because their thicknesses are thin and a gas pressure of interior thereof is low relative to the other bumper members 12, 13 or 22, 23. The bumper members 12, 13 for the medium and high pressure shock absorption of a front bumper 10 and the bumper members 22, 23 for the medium and high pressure shock absorption of a rear bumper 20 are so made that the gases of interior thereof can be circulated one another by being connected each other with the longitudinal gas circulation tubes 30. Further, the air sheets 41, 42, 43 and 44 for the side panels of corresponding forms thereto are mounted respectively at the side panel portions of the front and rear part of the body of a car, and the air sheets 41, 42 for the side panels of the right and left at front part are so made that the gases of interior thereof can be circulated one another by being connected each other with the lateral gas circulation tube 31.

At a location which said longitudinal gas circulation tubes 31 crosses with said lateral gas circulation tubes 30, a gas circulation control means 50 connected together with these tubes is mounted, so that the air curculation among the front and rear bumpers 10, 20 and the air sheets 41, 42 for the side panels of the right and left are allowed to be able to control or to interrupt. Aforesaid gas circulation control means 50 maintains in usual time the opend condition that the longitudinal and the lateral gas circulation tubes 30, 31 are rendered to communicate each other, but in case that, for example, if an air sheet 41 for a side panel of one side were punctured due to a shock from outside, then a valve for automatic control or the similar one could be employed which has a function being capable of instantaneously preventing the compressed gas within another side air sheet 42 or the front and rear bumpers 10, 20 to leak out through the punctured portion.

In addition, to the all doors of the right and left and to a roof also, the air sheets 60 for doors and an air sheet 70 for a roof filled with the gases into the interiors thereof which have respectively the identical shapes to them are mounted respectively.

As for the foresaid front and rear bumpers 10, 20, a material which the anti-pressure, anti-heat and anti-shock characteristics are excellent and a restoring force to the original state which can be returned instantly into a former condition even if a shock is inflicted is preferable, for example, a special engineering rubber, laminated fiber or the like can be utilized.

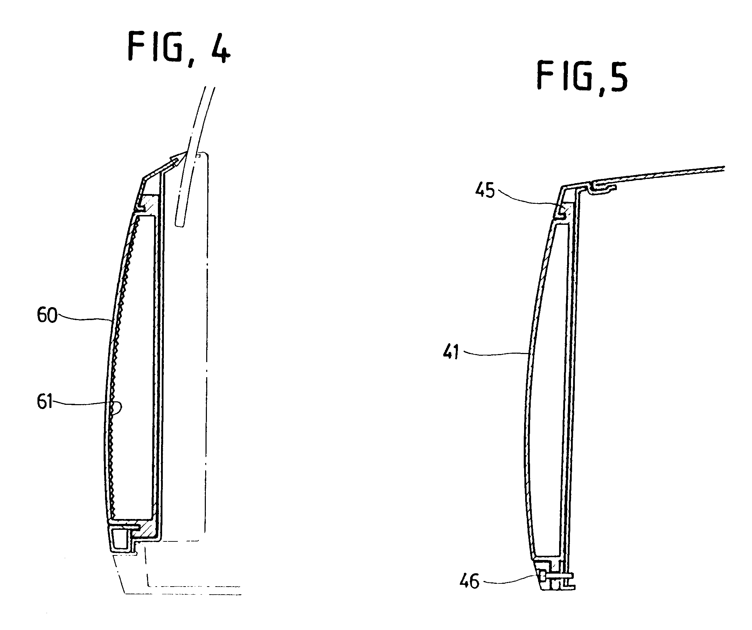

As for the air sheets for said side panels, doors and roof, either a materials such as aforesaid bumpers 10, 20 can be utilized, otherwise the empty portions maintained with gas-tight are formed at interior by utilizing a metal plate provided with the external features of existing car as it is, to which empty portions the gases are impregnated, thereby the effect of air sheet can be obtained. Particularly, as an example is shown in FIG. 4, the air sheets 60 for doors and an air sheet 70 for a roof, of which strength can be raised further by arranging the wire nets 61 on the internal surface of the external covers. In addition, for a method for mounting each air sheet as an example is shown in FIG. 5, either the mounting hooks 45 are formed with the material of relatively the strengh is high at the peripheral portions of the sheet member, of which corresponding portions at a car body are bent, and they are meshed each other thereby mounted, otherwise a mounting method utilizing the screws or both 46 can be utilized. In case that the air sheets are formed with an elastic material such as a rubber at the portions such as a roof, the side panels or the doors, in order that a central portion becomes to expand by a high pressure gas filled into the interior of said sheet, as an example, above the roof is shown in FIG. 1, forming the seam lines 71 for prevention and reinforcement is preferable. The gases which are filled into the interior of each air sheets including the front and rear bumpers 10, 20 should be no explosive and it is preferable as the specific gravity becoming lighter. Therefore, though the filling of air is suitable, further it is preferable to fill a helium gas which possess all of aforesaid conditions.

According to the present invention as aforementioned, since the structur of a bumper is formed with a triple structure for the low, medium and high pressure shock absorption, a relatively light shock can be absorbed at a low pressure shock absorption bumper, in case that a strong shock is inflicted, the stepped shock absorption can be obtained by the low, medium and high pressure shock absorption bumpers, at the same time, at a moment inflicted with a shock, the gas of directly shock receiving portion is dispersed respectively through the lateral and longitudinal gas circulation tubes, thereby the shock absorption effect is remarkably increased.

Further, even if a car is either inflicted with side collision or overturned according to a fall, since the shocks can be minimized by the air sheets which surround the side panels of right and left, the doors and a roof etc., the safety for the occupants in case of car accident can be secured further, and besides the effect of raising a riding feeling can be obtained by absorbing the engine noise of a car with the air sheets surrounding the body of a car. Moreover, by filling a helium gas which a specific gravity is lighter into the interior of the air sheet, a buoyancy is raised in case that a car is fallen into a water, so that an effect that is capable of preventing the throwning of the occupants is also obtained.

## Claims

1. A shock absorber system for a car comprising front and rear bumpers(10),(20) each structured with bumper members(11),(12),(13) (21),(22),(23) for low, medium and high pressure shock absorption; a gas of predetermined pressure is filled into the interior of the bumper members with each different thickness and gas capacity; air sheets (41),(42) (43),(44) for side panels of front and rear part of the car which have the identical forms respectively to the side panels of front and rear of existing car, and a gas is filled into the interior thereof; air sheets for doors which a gas is filled into the interior thereof with the identical forms to each external cover portions of the doors; an air sheet for a roof which a gas is filled into the interior thereof with an identical form to a roof; longitudinal gas circulation tubes(30) mounted longitudinally within the body of a car and which interconnect the bumper members(12),(13) for the medium and high pressure shock absorption at front with the bumper members (22),(23) for the medium and high pressure shock absorption at rear so that the gases of the interior thereof can be circulated one another; lateral gas circulation tubes (31) mounted laterally within the body of a car so as to cross with said longitudinal gas circulation tubes (30) and which interconnect the air sheets(41),(42) for the side panels of right and left at front of existing car each other so that the gas of the interior thereof can be circulated one another; and a gas circulation control means(50) which controls the gas circulation by being mounted at a crossing point of said longitudinal gas circulation tubes (30) and lateral gas circulation tubes (31).

2. A shock absorber for a car according to claim 1, wherein said gas which is filled into the front and rear bumpers and each air sheet is a helium gas.

3. A shock absorber for a car according to claim 1, wherein said air sheets for the doors and said air sheet comprise the wire nets for the reinforcement of strength.

## Patentansprüche

1. Stoßdämpfungssystem für ein Kraftfahrzeug, umfassend vordere und hintere Stoßstangen (10) (20), die jeweils mit Stoßelementen (11), (12), (13), (21), (22), (23) für geringe, mittlere und hohe Druckstoßabsorption versehen sind; wobei ein Gas von vorgegebenem Druck in das Innere der Stoßelemente mit jeweils verschiedenen Dicken und Gasinhalten gefüllt ist; Luftkissen (41), (42), (43), (44) für Seitenpanele von vorderen und hinteren Teilen des Kraftfahrzeugs, die die gleiche Form haben wie vordere und hintere Seitenpanele existierender Kraftfahrzeuge und die gasgefüllt sind; Luftkissen für Türen, deren Inneres gasgefüllt ist, mit gleicher Form wie äußere Blendenabschnitte der Türen; ein Luftkissen für ein Dach, dessen Inneres gasgefüllt ist, mit der Form eines Daches; Längs-Gaszirkulationsrohre (30), die in Längsrichtung im Inneren des Kraftfahrzeugs angebracht sind und die vorderen Stoßelementen (12), (13) für mittlere und hohe Druckstoßabsorption mit den hinteren Stoßelementen (22), (23) für mittlere und hohe Druckstoßabsorption derartig miteinander verbinden, daß das Gas im Inneren zirkulieren kann; Quer-Gaszirkulationsrohre (31), die quer im Inneren des Kraftfahrzeugs derartig angebracht sind, daß sie sich mit den Längs-Zirkulationsrohren (30) kreuzen und die die Luftkissen (41), (42) der vorderen linken und rechten Seitenpanele eines existierenden Kraftfahrzeugs derartig miteinander verbinden, daß das Gas im Inneren zirkulieren kann; und eine GaszirkulationsRegeleinrichtung (50), die die Gaszirkulation regelt, und im Kreuzungspunkt der Längs-Gaszirkulationsrohre und der Quer-Gaszirkulationsrohre (31) angebracht ist.

2. Stoßdämpfungssystem für ein Kraftfahrzeug nach Anspruch 1, wobei das in die vorderen und hinteren Stoßstangen und in jedes Gaskissen gefüllte Gas Heliumgas ist.

3. Stoßdämpfungssystem für ein Kraftfahrzeug nach Anspruch 1, wobei die Luftkissen für die Türen und das Luftkissen Drahtnetze zur Festigkeitsverstärkung umfassen.

## Revendications

1. Amortisseur de chocs pour un véhicule comprenant des pare-chocs avant et arrière (10), (20) structurés chacun par des éléments de pare-chocs (11), (12), (13), (21), (22), (23) pour absorber des chocs à basse pression, à moyenne pression et à haute pression ; un gaz sous une pression prédéterminée remplissant l'intérieur des éléments de pare-chocs qui ont chacun une épaisseur et une capacité en gaz différentes ; des couches d'air (41), (42), (43), (44) pour des panneaux latéraux de la partie avant et de la partie arrière du véhicule qui ont des formes respectivement identiques aux panneaux latéraux de l'avant et de l'arrière d'un véhicule existant, et avec un gaz remplissant l'intérieur de ces panneaux ; des couches d'air pour les portes à l'intérieur desquelles est injecté un gaz, qui ont des formes identiques à chaque partie de carrosserie extérieure des portes ; une couche d'air pour la toiture avec un gaz remplissant l'intérieur de la toiture et ayant une forme identique à celle d'une toiture; des tubes longitudinaux (30) pour la circulation d'un gaz monté longitudinalement à l'intérieur de la carrosserie d'un véhicule et interconnectant les éléments de pare-chocs (12), (13) pour l'absorption des chocs à moyenne pression et à haute pression à l'avant, les éléments de pare-chocs (22), (23) pour l'absorption des chocs à moyenne et haute pression à l'arrière de façon que les gaz à l'intérieur de ces éléments puissent circuler ; des tubes latéraux de circulation de gaz (31) montés latéralement à l'intérieur de la carrosserie d'un véhicule de manière à croiser lesdits tubes de circulation longitudinaux du gaz (30) et qui interconnectent les couches d'air (41), (42) des panneaux latéraux de droite et de gauche à l'avant d'un véhicule existant entre eux afin que le gaz situé à l'intérieur de ces panneaux puisse circuler de l'un à l'autre ; et un moyen de commande de la circulation du gaz (50) qui commande la circulation du gaz et qui est monté au point de croisement desdits tubes longitudinaux de circulation des gaz (30) et des tubes latéraux de circulation des gaz (31).

2. Amortisseur de chocs pour un véhicule selon la revendication 1, dans lequel ledit gaz qui remplit les pare-chocs avant et arrière et chaque couche d'air est de l'hélium.

3. Amortisseur de chocs pour un véhicule selon la revendication 1, dans lequel lesdites couches d'air des portes et ladite couche d'air comprennent les réseaux de fils pour le renforcement de la résistance.

# FIG, 1

FIG, 2

EP 0 335 952 B1

FIG. 3

FIG, 5

45

41

46

FIG, 4

60

61